(19) Europäisches Patentamt / European Patent Office / Office européen des brevets

(11) **EP 4 208 714 B1**

(12) **EUROPEAN PATENT SPECIFICATION**

(45) Date of publication and mention
of the grant of the patent:
**24.06.2026 Bulletin 2026/26**

(21) Application number: **21863117.4**

(22) Date of filing: **02.09.2021**

(51) International Patent Classification (IPC):
**G01N 23/221** $^{(2006.01)}$ **G21G 1/12** $^{(2006.01)}$
**G01N 23/2208** $^{(2018.01)}$

(52) Cooperative Patent Classification (CPC):
**G01N 23/221; G01N 2223/1013; G01N 2223/302; G21G 1/12**

(86) International application number:
**PCT/AU2021/051021**

(87) International publication number:
**WO 2022/047537 (10.03.2022 Gazette 2022/10)**

(54) **IMPROVEMENTS IN GAMMA-ACTIVATION ANALYSIS MEASUREMENTS**

VERBESSERUNGEN BEI GAMMAAKTIVIERUNGSANALYSEMESSUNGEN

AMÉLIORATIONS APPORTÉES À DES MESURES D'ANALYSE D'ACTIVATION PAR RAYONS GAMMA

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.09.2020 AU 2020903133**

(43) Date of publication of application:
**12.07.2023 Bulletin 2023/28**

(73) Proprietor: **Chrysos Corporation Limited
Tonsley, South Australia 5042 (AU)**

(72) Inventor: **TICKNER, James
Urrbrae, SA 5064 (AU)**

(74) Representative: **Keltie LLP
No. 1 London Bridge
London SE1 9BA (GB)**

(56) References cited:
**WO-A1-2015/089580 WO-A1-90/10859**

- **TICKNER JAMES ET AL: "Improving the sensitivity and accuracy of gamma activation analysis for the rapid determination of gold in mineral ores", APPLIED RADIATION AND ISOTOPES, ELSEVIER, OXFORD, GB, vol. 122, 1 January 2017 (2017-01-01), pages 28 - 36, XP029949277, ISSN: 0969-8043, DOI: 10.1016/J.APRADISO.2016.12.057**
- **YAGI M, MASUMOTO K: "A new internal reference method for activation analysis and its application: determination of Ti, Cr, Ni and Zr in aluminium alloys by means of photon activation", JOURNAL OF RADIOANALYTICAL AND NUCLEAR CHEMISTRY, SPRINGER, DORDRECHT, 1 January 1984 (1984-01-01), Dordrecht, pages 369 - 380, XP055912014, Retrieved from the Internet <URL:https://link.springer.com/content/pdf/10.1007/BF02036977.pdf> [retrieved on 20220412], DOI: 10.1007/BF02036977**

## Description

## Technical Field

The invention relates generally to improvements in gamma-activation analysis measurement, and, in particular, measuring the composition of unknown samples using gamma-activation analysis.

## Background of Invention

Gamma-activation analysis (GAA), also known as photon activation analysis, is a technique for determining the concentrations of certain target elements in a sample. GAA uses high energy X-rays produced by an X-ray source to irradiate a sample, typically with energies ranging from 6 MeV up to 15 MeV or more. The X-rays induce changes in some of the nuclei of target elements which can lead to the formation of radioisotopes.

After a period of irradiation, the sample is transferred away from the X-ray source to a detector system. The induced radioisotopes in the sample decay with a characteristic half-life and may emit gamma-rays with one or more characteristic energies. A suitable gamma-ray detector system counts the gamma-rays emitted from the sample and measures their energies. The number of gamma-rays emitted from a target element is proportional to the quantity of that element in the sample.

The proportionality constant relating the gamma-ray emission intensity and element mass depends on a number of factors; importantly, these include the intensity and energy spectrum of X-rays emitted from the X-ray source.

Industrial gamma activation analysis is conveniently performed using an X-ray source comprising an electron accelerator fitted with a Bremsstrahlung target that converts a portion of the electron energy into X-rays. The X-rays have a broad energy spectrum ranging up to the maximum electron beam energy, which is referred to as the end-point energy. The electron accelerator often is a linear accelerator (LINAC), a widely used technology capable of producing high-intensity beams. For reasons of cost and compactness, industrial LINAC sources normally do not include means, such as magnetic separation, for stabilising or monochromating the electron beam energy. Consequently, such sources typically exhibit significant fluctuations in the intensity or energy of the electron beam, which produce commensurate changes in the intensity and energy of the emitted X-ray beam. Such changes may be caused by variations in the temperature of the accelerator, the temperature of components in the power supply, or variations in the electrical supply voltage and can be treated as being effectively random.

WO2015089580 describes a method for analysing gold that includes simultaneous irradiation and measurement of a sample and a reference material containing a known quantity of the element bromine. The inventors determine that the activation of gold and bromine closely track one another with variations in X-ray beam intensity or energy over a wide energy range. Consequently, normalisation of the gold activation signal using the bromine activation signal provides a substantial improvement in measurement accuracy.

Yagi and Masumoto ("A New Internal Reference Method for Activation Analysis and its Application", J. Radioanalytical and Nucl. Chem. 1984, 84(2), pp369-380) describe a method for analysing a target element in an unknown sample by: first adding a quantity of a second element (reference element) to the unknown sample; second irradiating the unknown sample and a second sample containing known quantities of both target and reference elements under the same activation conditions; and third calculating the concentration of the target element in the unknown sample from ratios of gamma-ray intensities emitted by the target and reference elements from the unknown and second samples, and the known concentrations of these elements in the second sample. Provided that the activation conditions, such as the energy of the X-ray beam, do not vary between the two measurements then this approach allows for accurate determination of the concentration of the target element in the unknown sample.

Neutron activation analysis is a related analytical method where the formation of radioisotopes of target elements in the sample is induced by an incident neutron beam; similar considerations for correcting for variations in neutron intensity or energy apply as for GAA. In neutron activation analysis, it has been previously proposed to simultaneously irradiate a sample and a reference containing the same target elements. The sample and reference are then separately measured and the relative intensities of gamma-ray emissions for individual elements compared to determine the concentration of each target element in the sample relative to the known concentration in the reference.

However, this approach requires gamma-rays of identical energy emitted by the same elements in the sample and reference to be distinguished. Solutions involve measuring the sample and reference using separate detector systems, measuring the sample and reference sequentially in time, or using a detector system capable of resolving both the energy and origin position of gamma-rays. These considerations increase the cost or complexity of the detector system or reduce the rate at which samples can be assayed. Consequently, they are not considered ideal for an industrial analysis system where simplicity, low cost and high throughput are desirable.

Any reference to, or discussion of, any document, act or item of knowledge in this specification is included solely for the purpose of providing a context for the present invention. It is not suggested or represented that any of these matters or any combination thereof formed, at the priority date, part of the common general knowledge, or was known to be relevant to an attempt to solve any problem with which this specification is concerned.

## Summary of Invention

According to the present invention there is provided a method to determine a concentration of one or more target elements in a sample according to Claim 1 and a gamma activation analysis system for determining a concentration of one or more target elements in a sample according to Claim 13. Preferred embodiments of the invention are defined in Claims 2 to 12 and 14 to 15. In the following description, embodiments will be described. These embodiments fall within the scope of the present invention only if they are in accordance with Claim 1 or Claim 13.

The present invention relies on simultaneous irradiation of unknown samples and a reference material containing two or more reference elements. The reference elements are selected, amongst other considerations, such that their sensitivity to variations in the X-ray beam energy are different from one another. From these different responses, the response of a pseudo-element that tracks the response of the target element(s) in the sample can be reconstructed.

In particular, the activation rate of one or more target elements in an unknown sample is estimated by simultaneously irradiating and measuring the sample and a reference material containing two or more reference elements, which in turn allows for the concentration of the or each target element to be calculated.

Accordingly, one aspect of the present invention provides a method to determine a concentration of one or more target elements in a sample, the method comprising:

i. simultaneously irradiating the sample and a reference material containing at least two reference elements with Bremsstrahlung X-rays, such that activated nuclei are produced in at least some of any of the or each target element present in the sample, and to produce activated nuclei in the at least two reference elements;

ii. detecting deactivation gamma-rays from the irradiated sample and the irradiated reference material;

iii. determining a number of detected deactivation gamma-rays from any of the or each target element present in the irradiated sample and the at least two reference elements;

iv. determining the concentration of the or each target element in the sample comprising correcting the number of detected deactivation gamma-rays from any of the or each target element present in the irradiated sample due to variances in the Bremsstrahlung X-rays based on the number of detected deactivation gamma-rays from the at least two reference elements,

wherein the at least two reference elements have a variation in activation rate over a pre-defined X-ray end-point energy range which differs from one another.

In one embodiment, at least one of the reference elements exhibits a variation in activation rate over the pre-defined X-ray end-point energy range that differs by less than 3% from that of the or each target element.

In one embodiment, at least one of the reference elements exhibits a variation in activation rate over the pre-defined X-ray end-point energy range that differs by more than 20% from that of the or each target element.

In one embodiment, at least one of the reference elements exhibits a variation in activation rate over the pre-defined X-ray end-point energy range that differs by more than 20% compared to the variation in activation rate of another of the reference elements .

In one embodiment, the at least two of the reference elements exhibits a variation in activation rate over the pre-defined X-ray end-point energy range that is less than that of the or each target element.

In one embodiment, the at least two of the reference elements exhibits a variation in activation rate over the pre-defined X-ray end-point energy range that is more than that of the or each target element.

In one embodiment, the activated nuclei of the at least two reference elements exhibit half-lives in the range of 1 second to 10 minutes, preferably less than 2 minutes.

In one embodiment, the activated nuclei of the at least two reference elements emit one or more gamma-rays with an energy above 40 keV with a probability per decay of 1% or more.

In one embodiment, the energies of gamma-rays emitted by the activated nuclei do not interfere with the measurement of gamma-rays emitted by the or each target element.

In one embodiment, the energies of gamma-rays emitted by the activated nuclei do not interfere with the measurement of gamma-rays emitted by any other elements present in the sample.

In one embodiment, the target element and the at least two reference elements have X-ray induced activation reactions with a threshold energy below 15 MeV.

In one embodiment, the at least two reference elements produce activated nuclei from isotopes with a natural abundance of more than 90%, preferably more than 99%.

In one embodiment, the at least two reference elements, if they occur in the sample, shall have a mass in the sample which is less than 10%, preferably less than 1%, of the mass of the respective reference element in the reference material.

In one embodiment, determining the concentration of the or each target element includes the steps of:

a. calculating the time-corrected activation rates of the or each target element and the at least two reference elements;

b. determining a target element signal value for the or each target element based on a ratio of the time corrected activation rate of the or each target element and a function based on the time-corrected activation rates of the reference elements;

c. correcting for attenuation of the incident X-rays and the or each target element gamma-rays in the sample by applying an attenuation factor to create a attenuation-factor corrected signal value; and

d. multiplying the attenuation-factor corrected signal value by a normalisation constant.

In one embodiment, the attenuation factor is determined experimentally by measuring the gamma-ray signal from samples of different masses containing known concentrations of the target element, or by calculation using readily available gamma-ray attenuation coefficients.

In one embodiment, the normalisation constant is determined experimentally by comparing values of the attenuation-factor corrected signal value and the known mass of the or each target element in a plurality of samples, preferably, the normalisation constant is the gradient of a trend line of a plot of attenuation-corrected signal versus target element mass.

In one embodiment, there are two reference elements and the target element signal value is $\dfrac{R_t}{R_p f(R_s/R_p)}$, where

$R_t$, $R_p$ and $R_s$ are the time-corrected activation rates of the target element, first (primary) reference element and second reference element, respectively and where $f(R_s/R_p)$ is an experimentally determined function relating the ratio $R_t/R_p$ to the ratio $R_s/R_p$.

In one embodiment, the function $f$ is derived experimentally by

a. simultaneously irradiating a sample containing a known quantity of the target element and a reference material containing the first reference element and second reference element with Bremsstrahlung X-rays at a particular end-point energy;

b. detecting deactivation gamma-rays from the irradiated sample and the irradiated reference material;

c. determining a number of detected deactivation gamma-rays from any target element present in the irradiated sample and the at least two reference elements;

d. calculating the activation rate of the sample and the at least two reference elements;

e. repeating steps (a) to (d) at a different end-point energies over a range large enough to encompass typical variation in end-point energy operation that is expected; and

f. generating a look-up table for the function $f$ relating the ratio $R_t/R_p$ to $R_s/R_p$.

In one embodiment, the at least two reference elements include one of Br (Bromine) or Er (Erbium) or Ir (Iridium), and Tb (Terbium).

In one embodiment, the or each target element has a reaction threshold energy below 10 MeV.

In one embodiment, the at least two reference elements include one of Ge (Germanium) or Pd (Palladium) or Rb (Rubidium), and Tb (Terbium).

In one embodiment, the or each target element has a reaction threshold energy for neutron emission between 10 MeV and 14 MeV.

A second aspect of the present invention provides a gamma activation analysis system for determining a concentration of one or more target elements in a sample comprising:

a. an X-ray source suitable for providing Bremsstrahlung X-rays;

b. a gamma-ray detection system;

c. a computation apparatus,

wherein, in operation, the sample and a reference material, containing at least two reference elements which have a variation in activation rate over a pre-defined X-ray end-point energy range that differs from one another, are simultaneously exposed to the X-Ray source to be irradiated by the Bremsstrahlung X-rays before being provided to the gamma ray detection system where the number of detected deactivation gamma-rays from any of the or each target element present in the irradiated sample and the at least two reference elements is determined and provided to the computation apparatus, wherein the computation apparatus determines the concentration of the or each target element in the sample by correcting the number of detected deactivation gamma-rays from any of the or each target element present in the irradiated sample due to variances in the Bremsstrahlung X-ray energy or intensity based on the number of detected deactivation gamma-rays from the at least two reference elements.

In one embodiment, the at least two reference elements include one of Br (Bromine) or Er (Erbium) or Ir (Iridium), and Tb (Terbium).

In one embodiment, the or each target element has a reaction threshold energy for neutron emission below 10 MeV.

In one embodiment, the at least two reference elements include one of Ge (Germanium) or Pd (Palladium) or Rb (Rubidium), and Tb (Terbium).

In one embodiment, the or each target element has a reaction threshold energy for neutron emission between 10 MeV and 14 MeV.

In one embodiment, the system further includes a sample provision apparatus for providing the sample and the reference material to a position to be irradiated by the Bremsstrahlung X-rays and to the gamma-ray detection system.

A third aspect of the present invention provides a gamma activation analysis system suitable to implement the method provided according to the first aspect of the present invention.

The advantages of the current invention include:

- Improved accuracy of gamma activation analysis for determination of elemental concentrations in samples where no suitable single reference element exists; and

- Improved ability for simultaneous measurement of multiple target elements.

The intended application of the invention is the measurement of concentrations of elements in rock, mining, mineral ore or process stream samples. Example target elements include but are not limited to gold, silver, copper, lead, zinc and tin.

Other applications could include measurement of soils, industrial materials, general or electronic waste and other types of material.

## Brief Description of Drawings

Embodiments of the invention will now be described with reference to the accompanying drawings. It is to be understood that the embodiments are given by way of illustration only and the invention is not limited by this illustration. In the drawings:

Figure 1 is a schematic of a gamma activation analysis system utilising at least one embodiment of the present invention;

Figure 2 is a table of activation reactions and decay properties for potential reference material elements;

Figure 3 is a graph showing experimentally determined variations in activation rates for formation of $^{197M}Au$, $^{107M}Ag$ and $^{109M}Ag$ relative to rate of formation of $^{79M}Br$ versus LINAC end-point energy, with ratios normalised to unity at 8.5 MeV end-point energy;

Figure 4 is a graph showing experimentally determined variations in activation rates for formation of $^{158M}Tb$, $^{167M}Er$ and $^{191M}Ir$ relative to rate of formation of $^{79M}Br$ versus LINAC end-point energy, with ratios normalised to unity at an 8.5 MeV end-point energy;

Figure 5 is a graph showing experimentally determined variations in activation rates for formation of $^{75M}Ge$, $^{86m}Rb$, $^{109M}Pd$ and $^{158M}Tb$ relative to the rate of formation of $^{62}Cu$ versus LINAC end-point energy, with ratios normalised to unity at a 12 MeV end-point energy; and

## Detailed Description

As discussed previously, WO2015089580 discloses that the major sources of uncertainty when calculating the amount of gold in a sample using a gamma-activation analysis (GAA) relate to the flux and energy spectrum of X-rays from the source which relate to fluctuations in the intensity or energy of an electron beam producing the X-rays.

It is determined that the variation in the activation rates of gold and bromine with X-ray energy are very similar over the LINAC end-point energy range of 8.0-9.0 MeV. Consequently, if a sample with an unknown gold content is irradiated simultaneously with a reference material containing a known quantity of the element bromine, then the ratio of the gold and bromine activation rates is approximately constant for X-rays when end-point energies in this range. Normalising the gold gamma-ray intensity by the bromine gamma-ray intensity then substantially corrects for variations in both X-ray intensity and end-point energy.

For clarity, the term 'activation rate' used throughout this specification means, for a given reaction, the number of product nuclei produced per unit time. If a nuclear species X is converted by the incident X-ray beam to a second nuclear species X*, then the reaction rate for the formation of atoms of X* from atoms of X, $R_{X \to X*}$, is given by

$$R_{X \to X*} = N_X \int_{E_{THR}}^{E_{MAX}} \phi(E)\, \sigma(E) dE$$

where $N_X$ is the number of atoms of type X present in either the sample or reference material, $\phi(E)$ is the average X-ray photon flux inside the region containing the atoms of type X expressed as a function of X-ray energy $E$, $\sigma(E)$ is the microscopic reaction cross-section for the formation of X* from X which is also a function of the X-ray energy, and the integral extends from the lower energy threshold $E_{THR}$ of the reaction to the maximum X-ray energy, or end-point energy, $E_{MAX}$ emitted by the source.

In practice, the energy dependence of the X-ray photon flux and microscopic reaction cross-section may both only be known with limited precision, but the reaction rate can be accurately determined for a given X-ray source by experimentally measuring the emission of gamma-rays emitted by atoms of X* after X-ray irradiation of a known quantity of X.

GAA is applicable to detect the concentration of any element with a suitable activation reaction and, indeed, the major sources of uncertainty when calculating the concentration of any element in a sample using GAA relate to the flux and energy spectrum of X-rays from the source.

However, finding two elements whose activation rates vary in tandem with X-ray energy is not common. When target elements such as silver, copper and others are to be measured, there is no convenient reference element that can be used, unlike the situation with gold. Accordingly, a key factor for selection of a single reference element, that the variation of the reference element to target element cross section ratio over a range of electron beam energies is the same or very similar (less than a predetermined measurement accuracy), as taught by WO2015089580, is not possible or practical for many target elements.

Furthermore, simultaneous measurement of multiple target elements in the same sample would also require the reference material to contain multiple reference elements (generally, one per target element), which increases the probability of unwanted interferences between gamma-rays emitted by the reference and target elements.

Accelerators for industrial gamma activation analysis conveniently produce electron beams with energies up to about 15 MeV. The lowest useful energy for efficient activation is typically about 6 MeV. In this energy range, there are two important categories of activation reaction leading to the formation of radioisotopes from target elements: inelastic scattering producing a nuclear isomeric state, also known as a metastate, and neutron emission. Examples of these two reaction types include:

Isomer formation: Gold: $^{197}$Au (g,g') $^{197M}$Au; half-life = 7.73 sec; gamma-ray emission energy = 279 keV. Threshold < 1 MeV.

Neutron emission: Copper: $^{63}$Cu (g,n) $^{62}$Cu; half-life = 9.62 min; gamma-ray emission energy = 511 keV. Threshold 10.9 MeV.

The rate of production of a given radioisotope increases linearly with the X-ray intensity and generally more strongly (super-linearly) with X-ray energy for energies above the reaction threshold. An instrument performing gamma activation analysis must be capable of accurately estimating or measuring the target element activation rate at the time that the analysis is performed to allow the measured gamma-ray emission intensity for the given target element to be related back to that element's concentration in the sample.

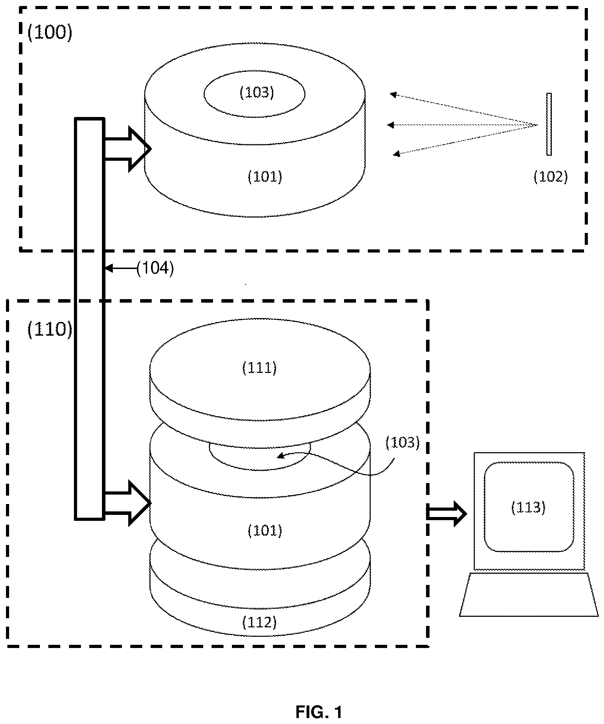

Referring now to Fig. 1, an embodiment of the invention comprises an irradiation station 100 and a gamma ray detection system 110. Sample material whose elemental composition is to be determined is loaded into a sample container 101. The sample container 101 is initially provided to the irradiation station 100 by a sample provision apparatus 104 and positioned in the vicinity of an X-ray source 102, which provides Bremsstrahlung X-rays, via an electron accelerator fitted with a Bremsstrahlung target. The electron accelerator is preferably a linear accelerator (LINAC). The irradiation station 100 also includes radiation shielding (not shown for clarity) to protect operators when the source is operated. A reference disc 103 holding reference materials containing two or more reference elements is removably attached to the outside of the sample container 101.

Although a "reference disc" is referred to throughout this specification, it will be appreciated that reference materials may be provided in any suitable manner for all embodiments, as long as the reference materials are capable of being irradiated at the same time as the relevant sample container which is expected to contain a target element, and removably positioned in a consistent position with respect to the sample, for all embodiments described herein. Therefore, the reference materials may be housed in a container or package of any suitable shape. For example, the reference material may be disposed in the form of an annular ring surrounding the sample container 101.

The gamma ray detection system 110 includes one or more gamma-ray detectors 111, 112 disposed around the sample in its container 101 and the reference disc 103. The gamma ray detection system 110 includes means for collecting signals from the gamma-ray detectors 111, 112 and provides information relating to the energy and number of detected gamma rays to a computation apparatus, or analysis system, 113 which processes this information to determination the sample's elemental content.

In operation, the sample container 101 containing the sample material, is first loaded into the irradiation station 100. The X-ray source 102 is operated for a period of time to induce activation of elements in the sample material, inside the sample container 101, and the reference material, contained in the reference disc 103.

Once the irradiation period is complete, the sample container 101 is transferred by the sample provision apparatus 104 to the gamma ray detection system 110. The sample provision apparatus 104 may be pneumatic, electrical or any other suitable means. The sample provision apparatus 104 is an optional aspect of the system, and the sample provision could be manual instead of automatic.

In the detector station 110, the sample container 101 is positioned adjacent to at least one gamma-ray detector 111. A second 112 or further detectors may be used to increase the efficiency with which gamma-rays emitted from the sample may be detected.

Ideally, at least one detector 111 is positioned adjacent to the side of the sample container 101 to which the reference disc 103 is fixed. Consequently, this detector 111 can detect gamma-rays emitted from the reference disc 103 without said gamma-rays having to pass through the sample material in the sample container 101 and thereby suffer attenuation.

The analysis system 113 registers and counts the gamma-ray signals from the detectors 111, 112. The analysis system 113 distinguishes the energy of detected gamma-rays, allowing signals from activated elements in the sample material in the sample container 101 to be separated from signals from the reference disc 103.

The sample container 101 is left in the detector station 110 until sufficient time has elapsed for the signals from the activated elements in the sample container 101 and in the reference disc 103 to be counted to a required level of precision. The sample container 101 may then be returned for a further cycle of activation and measurement or ejected from the measurement system to permit a new sample container to be analysed. The sample provisioning system 104 may allow simultaneous activation and measurement of different samples to improve throughput.

The reference disc 103 contains reference elements chosen whilst taking into account the following considerations:

- The variation in activation rate with LINAC end-point energy for the reference elements differ from each other in comparison to the difference in the variation in activation rate with LINAC end-point energy of the target element(s) and any of the reference elements. Most preferably, the variation in activation rate with energy of one of the reference elements is similar to that of the target element(s), and the variation in activation rate with energy of the other reference element(s) is significantly different. Similar, in this context, is taken to be a variation of less than 3% over a pre-defined end-point energy. Significantly, in this context, is a variation of more than 20% over a pre-defined end-point energy. Less preferably, at least one of the reference elements exhibit a variation in activation rate with energy that is significantly less than that of the target element(s), and at least one of the reference elements shall exhibit a variation in activation rate with energy that is significantly more than that of the target element(s). Alternatively, the two or more reference elements exhibit variations in activation rate that are less than the target element(s), or exhibit variations in activation rate that are more than the target element(s), but the variations of the individual reference elements differ.

- The reference elements are not expected to be present at significant concentrations in the sample materials to be measured. In particular, the mass of each reference element present in the sample should be less than 10% of the mass of the same reference element in the reference disc, and preferably less than 1%.

- X-ray interactions with all reference elements result in an unstable isotope with a suitable half-life, preferably in the range 1 sec to 10 min.

- The unstable isotopes formed in the X-ray induced reaction strongly emit one or more gamma-rays. In particular, the unstable isotopes emit at least one gamma-ray with an energy above 40 keV with a probability per decay of 1% or more, and more preferably gamma-rays with an energy above 60 keV or a probability of 10% or more.

- The energies of the gamma-rays emitted by the unstable isotopes do not interfere with the measurement of gamma-rays emitted by elements activated in the sample material.

The activation rates of the reference elements may be mathematically combined to determine a quantity equal to the expected activation rate of the target element(s) in the unknown sample, independent of variations in the intensity or energy of the X-ray source output. This calculated activation rate of the target elements can then be used to deduce the target element concentration from the measured gamma-ray intensity emitted by radioisotope(s) formed in X-ray reaction of the target elements.

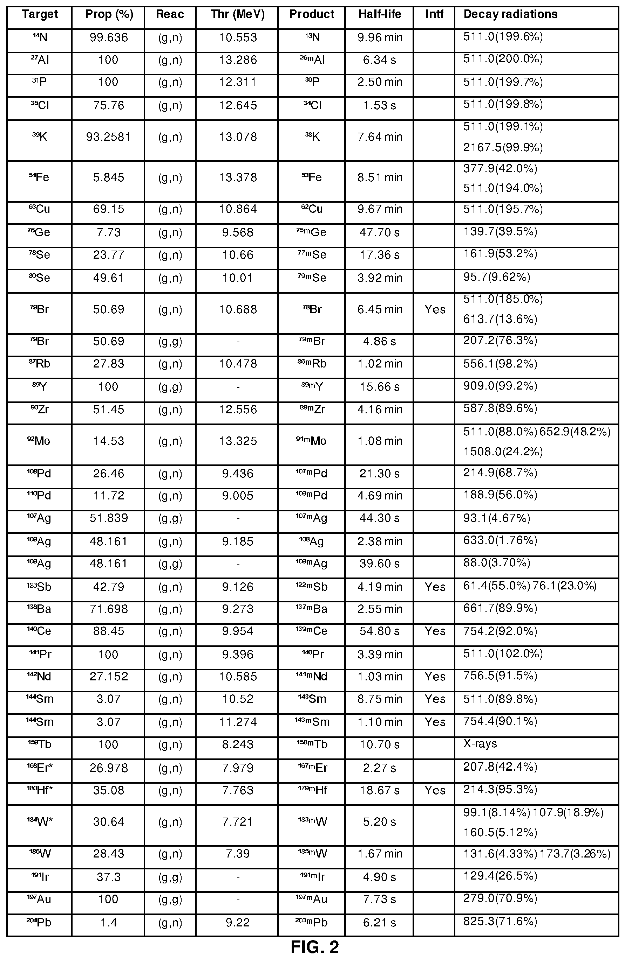

The criteria for selection of suitable reference elements is discussed above. Fig. 2 is a table which lists the elements in the periodic table that have X-ray induced activation reactions with a threshold energy below 15 MeV, a natural isotopic abundance of at least 1%, a product half-life in the range 1 second to 10 minutes, and that emit at least one gamma-ray with an energy above 40 keV with a probability of 1% or more. In respect of natural abundance, higher natural abundances are preferred, as less of the reference element is required to achieve a certain quantity of the desired isotope and the quantity of unwanted isotopes of the same element is reduced, which reduces the significance of any potential interfering reactions. The data used to populate the table of Fig. 2, including isotopic abundances, reaction thresholds, product half-lives and decay gamma-ray energies and intensities are readily available in scientific literature. For example, some or all of the data can accessed from the International Atomic Energy Agency Nuclear Data Services, available online at www-nds.iaea.org.

The columns in the table of Fig. 2 show:

- Target - the potential reference element and specific isotope that undergoes activation;
- Prop (%) - the natural abundance of this isotope;
- Reac - the reaction type; either neutron emission (g,n) or inelastic scattering (g,g);
- Thr (MeV) - the reaction threshold energy for neutron emission reactions.
- Product - the product isotope of the capture reaction - note that the product may be in either the ground state or a meta-state, the latter denoted by a superscript 'm';
- Half-life - the product half-life;
- Intf. - flags whether competing reactions on the same element that produce intense and/or long-lived gamma-ray emissions can be excited using similar X-ray energies required for the reaction in question; and
- Decay radiations - energies and intensities (%) of main X-ray or gamma-ray emitted from the product isotope.

The choice of the most suitable reference elements depends on the concentrations and decay properties of the other elements in the sample material that are to be measured using activation analysis, and the analysis time. For example, if an assay system is to measure 60 samples per hour, then it is convenient to select reference elements with a half-life of 2 minutes or less. The assay system can then select one of a small number of reference discs (typically 3-6) in turn, and residual activity from the previous cycle using this reference disc will have substantially decreased.

Further, the reference elements will produce gamma-rays of a convenient energy that do not interfere with the target element gamma-rays. Further, the reference elements should not be expected to be present in the samples being measured at significant concentrations. The mass of each reference element present in the sample should be less than 10% of the mass of the same reference element in the reference disc. Preferably, the mass of each reference element present in the sample should be less than 1% of the mass of the same reference element in the reference disc

Another factor influencing the choice of reference element is an absence of unwanted radioactive products formed via other X-ray induced reactions on the target isotope or other naturally occurring isotopes in the reference element. If these reactions have unfavourable decay properties, they can adversely affect the measurement of the desired decay products of both the reference element and elements being analysed in the sample. Reference elements where the target isotope constitutes 100% or close to 100% of the natural isotopic abundance are preferred to avoid or minimise this class of interference reactions. Alternatively, reference elements may be selected where naturally occurring isotopes other than the target isotope do not give rise to unstable reaction products in X-ray induced nuclear reactions, or the products of these reactions have extremely long or short half-lives, or the products of these reactions do not emit intense gamma-ray radiation.

Two examples are provided to illustrate the selection of the optimal reference elements.

The first example involves the simultaneous analysis of gold and silver via inelastic photon scattering. The $^{197}Au(g,g')^{197m}Au$ reaction produces the isomeric state of gold-197, which has a half-life of 7.73 seconds and decays to produce a gamma-ray having an energy of 279 keV. Both naturally occurring isotopes of silver can be activated in a similar fashion, producing the $^{107m}Ag$ and $^{109m}Ag$ isomeric states with half-lives of 44.3 and 39.8 s respectively, and emitting gamma-rays with energies of 93.1 and 88 keV. An X-ray end-point energy of 8.5 MeV is convenient for activating both gold and silver.

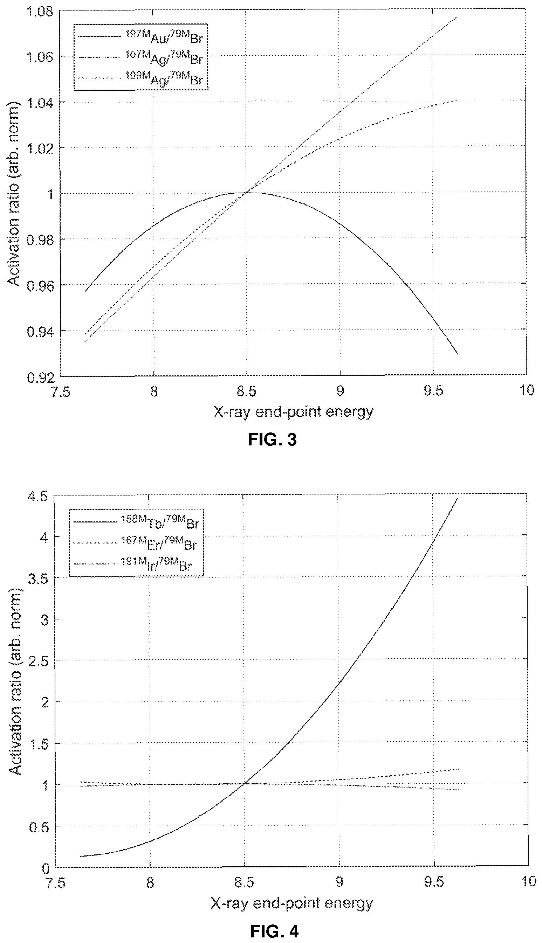

The use of bromine as a reference element for gold has been previously demonstrated, as the gold/bromine activation ratio demonstrates minimal energy dependence in the energy range 8-9 MeV. However, there is a small residual variation with energy that can be important for very high precision analysis, and the variation in the silver/bromine activation ratio with end-point energy is more pronounced. Fig. 3 plots the experimentally determined gold/bromine and silver/bromine activation ratios versus LINAC end-point energy in the approximate range 7.5-9.5 MeV.

Inspection of the table in Fig. 2 for elements with an activation threshold below an end-point energy of 8.5 MeV for the measurement of gold and silver reveals the following reference possibilities: Br, Y, Tb, Er, Hf, W and Ir. These elements undergo isomer formation reactions that have ill-defined thresholds (marked '-' in the table) but generally become significant at X-ray end-point energies above 6 MeV. In this example, Y is not considered further as its high gamma-ray emission energy (909 keV) introduces unwanted background under the lower energy gold and silver lines that degrades analysis performance for sample materials with low concentrations of the target elements. In addition, W is not considered further as it commonly occurs in appreciable concentrations in geological gold deposits and Hf is not considered further as reactions producing other long-lived isotopes have thresholds below 8.5 MeV.

The choice between these possibilities depends on how their activation rates vary relative to that of $^{79M}$Br (which is turn follows the isomeric activation rates of gold very closely, and that of silver fairly closely). High quality reaction cross-section data for the evaluation of these activation rate ratios are generally not available. However, the relative activation rates can be readily determined experimentally by preparing a sample containing the elements in question and then measuring the gamma-ray yields of the different reactions with the LINAC operated to produce different end-point energies. Fig. 4 plots the activation rates of Tb, Er and Ir relative to that of bromine as a function of LINAC energy point energy. The activation rate ratios are arbitrarily normalised to unity at an end-point energy of 8.5 MeV.

From the results presented in Fig. 4, it is apparent that the activation rates of $^{167M}$Er and $^{191M}$Ir are very similar to that of $^{79M}$Br as the activation rate ratio is close to unity over the whole energy range. In contrast, the activation rates for $^{158M}$Tb increases strongly with increasing energy compared to the bromine activation rate.

Consequently, the elements Br, Er or Ir, and the element Tb would be optimal reference elements for the accurate measurement of gold and silver in unknown samples. The element from the first list, hereafter referred to as the first, or primary, reference element, tracks the activation rate of gold and silver fairly closely. The element selected from the second list is hereafter referred to as the second, or secondary, reference element. The ratio of the activation rates of the secondary and primary reference elements is a strong function of the LINAC end-point energy and can be used to correct for small deviations in the ratio of activation rates of the target elements (here gold and silver) from the primary reference element, using the procedure described subsequently.

The second example involves the analysis of copper ores. Copper is most conveniently assayed via the reaction $^{63}$Cu(g,n)$^{62}$Cu, with copper-62 decaying with a half-life of 9.67 min via emission of a positron that in turn produces a pair of 511 keV gamma-rays. The copper-63 neutron emission reaction has a threshold energy of 10.9 MeV and can be conveniently measured using a LINAC operating to produce X-rays with an end-point energy of about 12 MeV. The 511 keV gamma-ray emission from copper arises from the annihilation of positrons emitted when copper-62 decays; it is preferable to avoid using reference elements that also decay via positron emission to avoid interference with the copper signal. Targeting a throughput of approximately 60 samples per hour limits selection to reference elements with half-lives less than 1-2 minutes, as discussed in the previous example. Further, at least one of the reference elements should have an activation threshold within about 1.5 MeV of the copper threshold to ensure a broadly similar activation response versus end-point energy. At least one of the reference elements may have a lower activation threshold to ensure a significantly different response versus end-point energy.

Taking these requirements into account reduces the list of possible reference elements in the table of Fig. 2 can be reduced to the following: Ge, Se, Br, Rb, Pd, Ag, Sb, Ce, Nd and Tb. The elements Se, Br, Ag, Sb, Ce, and Nd are not considered further as competing reactions produce unwanted product isotopes with strong gamma-ray emissions (including gamma-rays with an energy of 511 keV in some cases) when using an end-point energy of 12 MeV.

For example, the formation of $^{141M}$Nd via neutron emission from $^{142}$Nd is unavoidably accompanied by the formation of $^{149}$Nd via neutron emission from $^{150}$Nd. The isotope $^{149}$Nd is a strong gamma-ray emitter and the much lower threshold energy for this reaction means that its gamma-rays dominate the emission spectrum from a reference material containing Nd. Whilst isotopically separated or enriched material containing almost pure $^{142}$Nd is available, it is prohibitively expensive for routine industrial use.

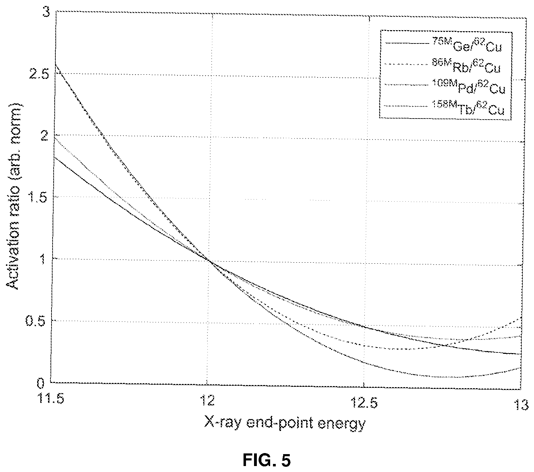

Fig. 5 plots the activation rate for the remaining elements Ge, Rb, Pd and Tb divided by the copper activation rate; the ratios are arbitrarily normalised to a ratio of unity at the target end-point energy of 12 MeV.

In contrast to the previous example, where activation rates for Br, Er and Ir closely track those of gold and silver, all of the possible reference elements show significant variation with LINAC end-point energy when compared to copper. However, Ge and Pd show comparatively less variation, and Rb and Tb comparatively more. Consequently, the elements Ge or Pd and Rb or Tb can be used for the performing accurate analysis of copper, corrected for variations in X-ray intensity or energy as described below.

Once the primary (p) and secondary (s) reference elements, recognising that the designation of primary and secondary is generally arbitrary, have been identified, the process for correcting the activation rate of the target element in the sample is as follows.

Let the number of measured gamma-rays from the target, primary reference and secondary reference elements be $N_{\gamma t}$, $N_{\gamma p}$ and $N_{\gamma s}$ respectively. Let the half-lives of the decay products of the reactions on these elements be thalf$_{t,p,s}$

respectively, and the associated decay rates defined by $r = \ln(2)/t$ half be $r_{t,p,s}$.

The time-corrected activation rates of the target element, primary reference element and secondary reference element (respectively $R_{t,p,s}$) are calculated according to

$$R_{t,p,s} = N_{\gamma t,p,s} \frac{r_{t,p,s}}{(1-exp(-r_{t,p,s}t_i))\cdot exp(-r_{t,p,s}t_c)\cdot(1-exp(-r_{t,p,s}t_m))} \quad \text{(Eq 1)}$$

where $t_i$, $t_c$ and $t_m$ are respectively the irradiation, cooling and measurement times used for the activation analysis.

The signal for the target element corrected for variations in LINAC energy and output, S, is then written as

$$S = \frac{R_t}{R_p f(R_s/R_p)} \quad \text{(Eq 2)}$$

where $f(R_s/R_p)$ is an experimentally determined function equal, to within an arbitrary normalisation factor, to the ratio $R_t/R_p$. Here, the term 'signal' refers to an intermediate mathematical quantity that for a given sample is proportional to the mass of target element in the sample. By construction, the signal is independent of variations in X-ray intensity, as these cause proportionate changes in both $R_t$ and $R_p$. The function $f$ corrects for variations in LINAC end-point energy. One process for finding $f$ is as follows. Reference material is prepared that contains a primary reference element and a secondary reference element. A sample is prepared containing a known quantity of a target element sufficient to produce a strong gamma-ray signature. The sample and reference material are activated together using the X-ray beam, measured using the gamma-ray detector system and the number of gamma-ray counts from the target element, primary reference element and secondary reference element reactions are recorded. The measurements are repeated with the LINAC end-point energy varied over a range large enough to encompass the typical variation in end-point energy expected during routine operation of the source. Time-corrected activation rates are calculated according to equation 1. A look-up table for the function $f$ relating the ratio $R_t/R_p$ to $R_s/R_p$ is then produced. The steps between LINAC end-point energies used in the test should be fine enough to allow linear or cubic spline interpolation to be used to determine $f$ values at intermediate points with an accuracy at least as good as the design analysis accuracy for the target elements.

Preferably, the quantity of the primary and secondary reference elements should be chosen so that the numbers of observed gamma-rays from their reaction products allow the determination of the activation rates for these elements with a statistical precision of 5%. More preferably, the numbers of gamma-rays should allow the activation rates to be determined with a precision of 3%, or still more preferably 1%. This ensures that the time-corrected activation rate for the primary element, and the ratio of time-corrected activation rates for the secondary and primary elements can both be determined with high statistical precision. The appropriate quantity of each reference element may be determined by scaling the mass used in the experiments performed to measure the activation rate ratios versus LINAC energy by the ratio of the number of target element gamma-ray measured during said experiments to the desired number of gamma-rays that would be measured during normal analysis operations.

For the first example discussed above where the target elements are silver and gold, if the LINAC is operated at an end-point energy of 8.5 MeV and an output of 160 Sv/min at a distance of 1 m, then 200 mg of Br and 400 mg of Tb are appropriate quantities.

For the second example discussed above where the target element is copper, if the LINAC is operated at an end-point energy of 12 MeV and an output of 40 Sv/min at a distance of 1 m, then 400 mg of Ge and 8 mg of Tb are appropriate quantities.

The mass of the target element in the sample can be calculated from the signal S by correcting for attenuation of the incident X-rays from the LINAC source and the target element gamma-rays in the sample and finally multiplying by a normalisation constant. Determination of the attenuation factor, which depends on the sample mass, can be either performed experimentally by measuring the gamma-ray signal from samples of different masses containing known concentrations of the target element, or by calculation using readily available gamma-ray attenuation coefficients. A computer radiation transport simulation method, such as a Monte Carlo simulation, is a convenient means of performing the attenuation calculations. The value of the normalisation constant can be determined experimentally by comparing values of the attenuation-factor corrected signal and the known mass of the target element in a suite of samples. A plot of attenuation-corrected signal versus target element mass should be a straight line whose slope equals the value of the normalisation constant. That is, the normalisation constant is the gradient of a trend line of a plot of attenuation-corrected signal versus target element mass.

Finally, the concentration of the target element in the sample can be determined by dividing the measured mass of the target element in the sample by the sample mass.

Overall, a first (or primary) reference element of Br or Er or Ir and a second (or secondary) reference element of Tb will be generally useful for correcting measurements of other elements accessible with LINAC end-point energies below 10 MeV. Similarly, a first reference element of Ge or Pd or Rb and a second reference element of Tb will be useful for other elements accessible with LINAC end-point energies in the 11-14 MeV range.

While the invention has been described in conjunction with a limited number of embodiments, it will be appreciated by those skilled in the art that many alternative, modifications and variations in light of the foregoing description are possible. The invention is defined in the appended claims.

Any reference to or discussion of any document, act or item of knowledge in this specification is included solely for the purpose of providing a context for the present invention. It is not suggested or represented that any of these matters or any combination thereof formed at the priority date part of the common general knowledge, or was known to be relevant to an attempt to solve any problem with which this specification is concerned.

In this specification, the terms 'comprises', 'comprising', 'includes', 'including', or similar terms are intended to mean a non-exclusive inclusion, such that a method, system or apparatus that comprises a list of elements does not include those elements solely, but may well include other elements not listed.

## Claims

1. A method to determine a concentration of one or more target elements in a sample, the method comprising:

   i. simultaneously irradiating the sample and a reference material containing at least two reference elements with Bremsstrahlung X-rays, such that activated nuclei are produced in at least some of any of the or each target element present in the sample, and to produce activated nuclei in the at least two reference elements;
   ii. detecting deactivation gamma-rays from the irradiated sample and the irradiated reference material;
   iii. determining a number of detected deactivation gamma-rays from any of the or each target element present in the irradiated sample and the at least two reference elements;
   iv. determining the concentration of the or each target element in the sample comprising correcting the number of detected deactivation gamma-rays from any of the or each target element present in the irradiated sample due to variances in the Bremsstrahlung X-rays based on the number of detected deactivation gamma-rays from the at least two reference elements,

   wherein the at least two reference elements have a variation in activation rate over a pre-defined X-ray end-point energy range which differs from one another, and wherein the at least two reference elements are different to the or each target element.

2. A method as claimed in claim 1, wherein:
   at least one of the reference elements exhibits a variation in activation rate over the pre-defined X-ray end-point energy range that differs by less than 3% than of the or each target element and, preferably, at least one of the reference elements exhibits a variation in activation rate over the pre-defined X-ray end-point energy range that differs by more than 20% of the or each target element; or
   at least one of the reference elements exhibits a variation in activation rate over the pre-defined X-ray end-point energy range that differs by more than 20% compared to the variation in activation rate of another of the reference elements.

3. A method as claimed in claim 1, wherein at least two of the reference elements exhibits a variation in activation rate over the pre-defined X-ray end-point energy range of that is less than the or each target element or more than the or each target element.

4. A method as claimed in any one of claims 1 to 3, wherein the activated nuclei of the at least two reference elements exhibit half-lives in the range of 1 second to 10 minutes, preferably less than 2 minutes and, preferably, wherein the activated nuclei of the at least two reference elements emit one or more gamma-rays with an energy above 40 keV with a probability per decay of 1% or more.

5. A method as claimed in any one of claims 1 to 4, wherein the energies of gamma-rays emitted by the activated nuclei do not interfere with the measurement of gamma-rays emitted by the or each target element and, preferably, the energies of gamma-rays emitted by the activated nuclei do not interfere with the measurement of gamma-rays emitted by any other elements present in the sample.

6. A method as claimed in any one of claims 1 to 5, wherein the target element and the at least two reference elements have X-ray induced activation reactions with a threshold energy below 15 MeV.

7. A method as claimed in any one of claims 1 to 6, wherein the at least two reference elements that produce activated nuclei have a natural isotopic abundance of more than 90%, preferably 99%.

8. A method as claimed in any one of claims 1 to 7, wherein the at least two reference elements, if they occur in the sample, have a mass in the sample which is less than 10%, preferably less than 1%, of the mass of the respective reference element in the reference material.

9. A method as claimed in any one of claims 1 to 8, wherein determining the concentration of the or each target element includes the steps of:

   a. calculating the time-corrected activation rates of the or each target element and the at least two reference elements;
   b. determining a target element signal value for the or each target element based on a ratio of the time corrected activation rate of the or each target element and a function based on the time-corrected activation rates of the reference elements;
   c. correcting for attenuation of the incident X-rays and the or each target element gamma-rays in the sample by applying an attenuation factor to create a attenuation-factor corrected signal value; and
   d. multiplying the attenuation-factor corrected signal value by a normalisation constant.

10. A method as claimed in claim 9, wherein the attenuation factor is determined experimentally by measuring the gamma-ray signal from samples of different masses containing known concentrations of the target element or by calculation using readily available gamma-ray attenuation coefficients.

11. A method as claimed in claim 10, wherein the normalisation constant is determined experimentally by comparing values of the attenuation-factor corrected signal value and the known mass of the or each target element in a plurality of samples, preferably, the normalisation constant is the gradient of a trend line of a plot of attenuation-correct signal versus target element mass.

12. A method as claimed in any one of claims 1 to 11, wherein the or each target element has an activation reaction threshold below 10 MeV and the at least two reference elements include one of Br (Bromine) or Er (Erbium) or Ir (Iridium), and Tb (Terbium) or the or each target element has a reaction threshold energy between 10 MeV and 14 MeV and the at least two reference elements include one of Ge (Germanium) or Pd (Palladium) or Rb (Rubidium), and Tb (Terbium).

13. A gamma activation analysis system (113) for determining a concentration of one or more target elements in a sample comprising:

   a. an X-ray source (102) suitable for providing Bremsstrahlung X-rays;
   b. a gamma-ray detection system (110);
   c. a computation apparatus,

   wherein, in operation, the sample and a reference material, containing at least two reference elements which have a variation in activation rate over a pre-defined X-ray end-point energy range that differ from one another, are simultaneously exposed to the X-Ray source (102) to be irradiated by the Bremsstrahlung X-rays before being provided to the gamma ray detection system (110) where the number of detected deactivation gamma-rays from any of the or each target element present in the irradiated sample and the at least two reference elements is determined and provided to the computation apparatus, wherein the computation apparatus determines the concentration of the or each target element in the sample comprising correcting the number of detected deactivation gamma-rays from any of the or each target element present in the irradiated sample due to variances in the Bremsstrahlung X-rays based on the number of detected deactivation gamma-rays from the at least two reference elements, and wherein the at least two reference elements are different to the or each target element.

14. A gamma activation analysis system (113) as claimed in claim 13, wherein the or each target element has a reaction threshold energy below 10 MeV and the at least two reference elements include one of Br (Bromine) or Er (Erbium) or Ir (Iridium), and Tb (Terbium) or the or each target element has a reaction threshold energy between 10 MeV and 14 MeV and the at least two reference elements include one of Ge (Germanium) or Pd (Palladium) or Rb (Rubidium), and Tb (Terbium).

**15.** A gamma activation analysis system (113) suitable to implement the method as claimed in claims 1 to 12.

**Patentansprüche**

**1.** Verfahren zum Bestimmen einer Konzentration von einem oder mehreren Zielelementen in einer Probe; wobei das Verfahren umfasst:

i. gleichzeitiges Bestrahlen der Probe und eines Referenzmaterials, das mindestens zwei Referenzelemente enthält, mit Bremsstrahlungs-Röntgenstrahlen, so dass aktivierte Kerne in mindestens einigen von jedwedem von dem oder jedem in der Probe vorhandenen Zielelement produziert werden, und zum Produzieren von aktivierten Kernen in den mindestens zwei Referenzelementen;
ii. Detektieren von Deaktivierungs-gamma-Strahlen aus der bestrahlten Probe und dem bestrahlten Referenzmaterial;
iii. Bestimmen einer Anzahl von detektierten Deaktivierungs-gamma-Strahlen aus jedwedem von dem oder jedem in der bestrahlten Probe vorhandenen Zielelement und den mindestens zwei Referenzelementen;
iv. Bestimmen der Konzentration von dem oder jedem Zielelement in der Probe, umfassend Korrigieren der Anzahl der detektierten Deaktivierungs-gamma-Strahlen aus jedwedem von dem oder jedem in der bestrahlten Probe vorhandenen Zielelement infolge von Variationen in den Bremsstrahlungs-Röntgenstrahlen basierend auf der Anzahl der detektierten Deaktivierungs-gamma-Strahlen aus den mindestens zwei Referenzelementen,

wobei die mindestens zwei Referenzelemente eine Variation in der Aktivierungsrate über einen vordefinierten Röntgenstrahlenendpunktenergiebereich haben, die sich voneinander unterscheiden, und wobei die mindestens zwei Referenzelemente sich von dem oder jedem Zielelement unterscheiden.

**2.** Verfahren nach Anspruch 1, wobei:

mindestens eines von den Referenzelementen eine Variation in der Aktivierungsrate über den vordefinierten Röntgenstrahlenendpunktenergiebereich zeigt, die sich um weniger als 3 % von dem oder jedem Zielelement unterscheidet, und wobei vorzugsweise mindestens eines der Referenzelemente eine Variation in der Aktivierungsrate über den vordefinierten Röntgenstrahlenendpunktenergiebereich zeigt, der sich um mehr als 20 % von dem oder jedem Zielelement unterscheidet; oder
mindestens eines der Referenzelemente eine Variation in der Aktivierungsrate über den vordefinierten Röntgenstrahlenendpunktenergiebereich zeigt, die sich um mehr als 20 % unterscheidet, verglichen mit der Variation in der Aktivierungsrate des anderen der Referenzelemente.

**3.** Verfahren nach Anspruch 1, wobei mindestens zwei der Referenzelemente eine Variation in der Aktivierungsrate über den vordefinierten Röntgenstrahlenendpunktenergiebereich zeigen, die kleiner als das oder jedes Zielelement oder größer als das oder jedes Zielelement ist.

**4.** Verfahren nach einem der Ansprüche 1 bis 3, wobei die aktivierten Kerne der mindestens zwei Referenzelemente Halbwertzeiten im Bereich von 1 Sekunde bis 10 Minuten, vorzugsweise weniger als 2 Minuten zeigen, und wobei die aktivierten Kerne der mindestens zwei Referenzelemente vorzugsweise ein oder mehrere gamma-Strahlen mit einer Energie über 40 keV mit einer Wahrscheinlichkeit pro Zerfall von 1 % oder mehr emittieren.

**5.** Verfahren nach einem der Ansprüche 1 bis 4, wobei die Energien der durch die aktivierten Kerne emittierten gamma-Strahlen nicht mit der Messung der durch das oder jedes Zielelement emittierten gamma-Strahlen interferieren und vorzugsweise die Energien der durch die aktivierten Kerne emittierten gamma-Strahlen nicht mit der Messung von durch jedwede anderen in der Probe vorhandenen Elemente emittierten gamma-Strahlen interferieren.

**6.** Verfahren nach einem der Ansprüche 1 bis 5, wobei das Zielelement und die mindestens zwei Referenzelemente röntgenstrahleninduzierte Aktivierungsreaktionen mit einer Schwellenwertenergie unter 15 MeV aufweisen.

**7.** Verfahren nach einem der Ansprüche 1 bis 6, wobei die mindestens zwei Referenzelemente, die aktivierte Kerne produzieren, eine natürliche Isotopenhäufigkeit von mehr als 90 %, vorzugsweise 99 % aufweisen.

**8.** Verfahren nach einem der Ansprüche 1 bis 7, wobei die mindestens zwei Referenzelemente, falls sie in der Probe vorkommen, eine Masse in der Probe haben, die kleiner als 10 %, vorzugsweise kleiner als 1 % der Masse des jeweiligen Referenzelements in dem Referenzmaterial ist.

9. Verfahren nach einem der Ansprüche 1 bis 8, wobei Bestimmen der Konzentration von dem oder jedem Zielelement die folgenden Schritte einschließt:

   a. Berechnen der zeitkorrigierten Aktivierungsraten des oder jedes Zielelements und der mindestens zwei Referenzelemente;
   b. Bestimmen eines Zielelementsignalwerts für das oder jedes Zielelement basierend auf einem Verhältnis der zeitkorrigierten Aktivierungsrate des oder jedes Zielelements und einer Funktion basierend auf den zeitkorrigierten Aktivierungsraten der Referenzelemente;
   c. Korrigieren auf Abschwächung der einfallenden Röntgenstrahlen und der gamma-Strahlen des oder jedes Zielelements in der Probe durch Anwenden eines Abschwächungsfaktors, um einen abschwächungsfaktorkorrigierten Signalwert zu erzeugen; und
   d. Multiplizieren des abschwächungsfaktorkorrigierten Signalwerts mit einer Normalisierungskonstante.

10. Verfahren nach Anspruch 9, wobei der Abschwächungsfaktor experimentell durch Messen des gamma-Strahlensignals aus Proben mit unterschiedlichen Massen, die bekannte Konzentrationen des Zielelements enthalten, oder durch Berechnung unter Verwendung von leicht verfügbaren Abschwächungskoeffizienten für gamma-Strahlen bestimmt wird.

11. Verfahren nach Anspruch 10, wobei die Normalisierungskonstante experimentell durch Vergleichen von Werten des abschwächungsfaktorkorrigierten Signalwerts und der bekannten Masse des oder jedes Zielelements in einer Vielzahl von Proben bestimmt wird, wobei die Normalisierungskonstante vorzugsweise der Gradient einer Trendlinie einer Auftragung des abschwächungskorrigierten Signals gegen die Zielelementmasse ist.

12. Verfahren nach einem der Ansprüche 1 bis 11, wobei das oder jedes Zielelement einen Aktivierungsreaktionsschwellenwert unter 10 MeV aufweist und die mindestens zwei Referenzelemente eines von Br (Brom) oder Er (Erbium) oder Ir (Iridium) und Tb (Terbium) einschließen, oder das oder jedes Zielelement eine Reaktionsschwellenwertenergie zwischen 10 MeV und 14 MeV aufweist und die mindestens zwei Referenzelemente eines von Ge (Germanium) oder Pd (Palladium) oder Rb (Rubidium) und Tb (Terbium) einschließen.

13. Gamma-Aktivierungs-Analysesystem (113) zum Bestimmen einer Konzentration von einem oder mehreren Zielelementen in einer Probe, umfassend:

   a. eine Röntgenstrahlenquelle (102), die zum Bereitstellen von Bremsstrahlungs-Röntgenstrahlen geeignet ist;
   b. ein gamma-Strahlen-Detektierungssystem (110);
   c. ein Rechengerät,

   wobei im Betrieb die Probe und ein Referenzmaterial, das mindestens zwei Referenzelemente enthält, die eine Variation in der Aktivierungsrate über einen vordefinierten Röntgenstrahlenendpunktenergiebereich aufweisen, die sich voneinander unterscheiden, gleichzeitig der Röntgenstrahlenquelle (102) ausgesetzt werden, um durch die Bremsstrahlungs-Röntgenstrahlen bestrahlt zu werden, bevor sie dem gamma-Strahlen-Detektierungssystem (110) bereitgestellt werden, wobei die Anzahl der detektierten Deaktivierungs-gamma-Strahlen von jedwedem von dem oder jedem in der bestrahlten Probe vorhandenen Zielelement und den mindestens zwei Referenzelementen bestimmt und dem Rechengerät bereitgestellt wird, wobei das Rechengerät die Konzentration des oder jedes Zielelements in der Probe bestimmt, umfassend Korrigieren der Anzahl der detektierten Deaktivierungs-gamma-Strahlen aus jedwedem von dem oder jedem in der bestrahlten Probe vorhandenen Zielelement infolge von Varianzen in den Bremsstrahlungs-Röntgenstrahlen basierend auf der Anzahl der detektierten Deaktivierungs-gamma-Strahlen aus den mindestens zwei Referenzelementen, und wobei die mindestens zwei Referenzelemente sich von dem oder jedem Zielelement unterscheiden.

14. Gamma-Aktivierungs-Analysesystem (113) nach Anspruch 13, wobei das oder jedes Zielelement eine Reaktionsschwellenwertenergie unter 10 MeV aufweist und die mindestens zwei Referenzelemente eines von Br (Brom) oder Er (Erbium) oder Ir (Iridium) und Tb (Terbium) einschließen, oder das oder jedes Zielelement eine Reaktionsschwellenwertenergie zwischen 10 MeV und 14 MeV aufweist und die mindestens zwei Referenzelemente eines von Ge (Germanium) oder Pd (Palladium) oder Rb (Rubidium) und Tb (Terbium) einschließen.

15. Gamma-Aktivierungs-Analysesystem (113), das zum Implementieren des Verfahrens nach den Ansprüchen 1 bis 12 geeignet ist.

## Revendications

1. Procédé de détermination d'une concentration d'un ou plusieurs éléments cibles dans un échantillon, le procédé comprenant :

   i. l'irradiation simultanée de l'échantillon et d'un matériau de référence contenant au moins deux éléments de référence avec des rayons X de freinage, de telle sorte que des noyaux activés soient produits dans au moins certains quelconques de l'élément cible ou de chaque élément cible présent dans l'échantillon, et afin de produire des noyaux activés dans les au moins deux éléments de référence ;
   ii. la détection de rayons gamma de désactivation provenant de l'échantillon irradié et du matériau de référence irradié ;
   iii. la détermination d'un nombre de rayons gamma de désactivation détectés provenant de certains quelconques de l'élément cible ou de chaque élément cible présent dans l'échantillon irradié et des au moins deux éléments de référence ;
   iv. la détermination de la concentration de l'élément cible ou de chaque élément cible dans l'échantillon comprenant la correction du nombre de rayons gamma de désactivation détectés provenant de certains quelconques de l'élément cible ou de chaque élément cible présent dans l'échantillon irradié en raison de variations des rayons X de freinage sur la base du nombre de rayons gamma de désactivation détectés provenant des au moins deux éléments de référence,

   dans lequel les au moins deux éléments de référence présentent une variation du taux d'activation sur une plage prédéfinie d'énergie de point terminal des rayons X qui diffère l'une de l'autre, et dans lequel les au moins deux éléments de référence sont différents de l'élément cible ou de chaque élément cible.

2. Procédé selon la revendication 1, dans lequel :

   au moins un des éléments de référence présente une variation du taux d'activation sur la plage prédéfinie d'énergie de point terminal des rayons X qui diffère de moins de 3 % de celle de l'élément cible ou de chaque élément cible et, de préférence, au moins un des éléments de référence présente une variation du taux d'activation sur la plage prédéfinie d'énergie de point terminal des rayons X qui diffère de plus de 20 % de celle de l'élément cible ou de chaque élément cible ; ou
   au moins un des éléments de référence présente une variation du taux d'activation sur la plage prédéfinie d'énergie de point terminal des rayons X qui diffère de plus de 20 % par rapport à la variation du taux d'activation d'un autre des éléments de référence.

3. Procédé selon la revendication 1, dans lequel au moins deux des éléments de référence présentent une variation du taux d'activation sur la plage prédéfinie d'énergie de point terminal des rayons X qui est inférieure à celle de l'élément cible ou de chaque élément cible ou supérieure à celle de l'élément cible ou de chaque élément cible.

4. Procédé selon l'une quelconque des revendications 1 à 3, dans lequel les noyaux activés des au moins deux éléments de référence présentent des demi-vies dans la plage de 1 seconde à 10 minutes, de préférence inférieures à 2 minutes et, de préférence, dans lequel les noyaux activés des au moins deux éléments de référence émettent un ou plusieurs rayons gamma ayant une énergie supérieure à 40 keV avec une probabilité par désintégration de 1 % ou plus.

5. Procédé selon l'une quelconque des revendications 1 à 4, dans lequel les énergies des rayons gamma émis par les noyaux activés n'interfèrent pas avec la mesure des rayons gamma émis par l'élément cible ou chaque élément cible et, de préférence, les énergies des rayons gamma émis par les noyaux activés n'interfèrent pas avec la mesure des rayons gamma émis par tous autres éléments présents dans l'échantillon.

6. Procédé selon l'une quelconque des revendications 1 à 5, dans lequel l'élément cible et les au moins deux éléments de référence présentent des réactions d'activation induites par rayons X ayant une énergie seuil inférieure à 15 MeV.

7. Procédé selon l'une quelconque des revendications 1 à 6, dans lequel les au moins deux éléments de référence qui produisent des noyaux activés présentent une abondance isotopique naturelle supérieure à 90 %, de préférence à 99

%.

**8.** Procédé selon l'une quelconque des revendications 1 à 7, dans lequel les au moins deux éléments de référence, s'ils sont présents dans l'échantillon, présentent une masse dans l'échantillon qui est inférieure à 10 %, de préférence inférieure à 1 %, de la masse de l'élément de référence respectif dans le matériau de référence.

**9.** Procédé selon l'une quelconque des revendications 1 à 8, dans lequel la détermination de la concentration de l'élément cible ou de chaque élément cible inclut les étapes suivantes :

a. le calcul des taux d'activation corrigés dans le temps de l'élément cible ou de chaque élément cible et des au moins deux éléments de référence ;
b. la détermination d'une valeur de signal d'élément cible pour l'élément cible ou chaque élément cible sur la base d'un rapport entre le taux d'activation corrigé dans le temps de l'élément cible ou de chaque élément cible et une fonction basée sur les taux d'activation corrigés dans le temps des éléments de référence ;
c. la correction de l'atténuation des rayons X incidents et des rayons gamma de l'élément cible ou de chaque élément cible dans l'échantillon par application d'un facteur d'atténuation afin de créer une valeur de signal corrigée par le facteur d'atténuation ; et
d. la multiplication de la valeur de signal corrigée par le facteur d'atténuation par une constante de normalisation.

**10.** Procédé selon la revendication 9, dans lequel le facteur d'atténuation est déterminé expérimentalement par mesure du signal de rayons gamma provenant d'échantillons de masses différentes contenant des concentrations connues de l'élément cible ou par calcul à l'aide de coefficients d'atténuation des rayons gamma facilement disponibles.

**11.** Procédé selon la revendication 10, dans lequel la constante de normalisation est déterminée expérimentalement par comparaison de valeurs de la valeur de signal corrigée par le facteur d'atténuation et de la masse connue de l'élément cible ou de chaque élément cible dans une pluralité d'échantillons, de préférence, la constante de normalisation est le gradient d'une ligne de tendance d'un tracé du signal corrigé par atténuation en fonction de la masse de l'élément cible.

**12.** Procédé selon l'une quelconque des revendications 1 à 11, dans lequel l'élément cible ou chaque élément cible présente un seuil de réaction d'activation inférieur à 10 MeV et les au moins deux éléments de référence incluent un élément parmi Br (brome) ou Er (erbium) ou Ir (iridium), et Tb (terbium), ou l'élément cible ou chaque élément cible présente une énergie seuil de réaction entre 10 MeV et 14 MeV et les au moins deux éléments de référence incluent un élément parmi Ge (germanium) ou Pd (palladium) ou Rb (rubidium), et Tb (terbium).

**13.** Système d'analyse par activation gamma (113) destiné à déterminer une concentration d'un ou plusieurs éléments cibles dans un échantillon, comprenant :

a. une source de rayons X (102) apte à fournir des rayons X de freinage ;
b. un système de détection de rayons gamma (110) ;
c. un appareil de calcul,

dans lequel, en fonctionnement, l'échantillon et un matériau de référence contenant au moins deux éléments de référence, qui présentent une variation du taux d'activation sur une plage prédéfinie d'énergie de point terminal des rayons X qui diffère l'une de l'autre, sont simultanément exposés à la source de rayons X (102) afin d'être irradiés par les rayons X de freinage avant d'être fournis au système de détection de rayons gamma (110), où le nombre de rayons gamma de désactivation détectés provenant de certains quelconques de l'élément cible ou de chaque élément cible présent dans l'échantillon irradié et des au moins deux éléments de référence est déterminé et fourni à l'appareil de calcul, dans lequel l'appareil de calcul détermine la concentration de l'élément cible ou de chaque élément cible dans l'échantillon comprenant la correction du nombre de rayons gamma de désactivation détectés provenant de certains quelconques de l'élément cible ou de chaque élément cible présent dans l'échantillon irradié en raison de variations des rayons X de freinage sur la base du nombre de rayons gamma de désactivation détectés provenant des au moins deux éléments de référence, et dans lequel les au moins deux éléments de référence sont différents de l'élément cible ou de chaque élément cible.

**14.** Système d'analyse par activation gamma (113) selon la revendication 13, dans lequel l'élément cible ou chaque élément cible présente une énergie seuil de réaction inférieure à 10 MeV et les au moins deux éléments de référence incluent un élément parmi Br (brome) ou Er (erbium) ou Ir (iridium), et Tb (terbium), ou l'élément cible ou chaque élément cible présente une énergie seuil de réaction entre 10 MeV et 14 MeV et les au moins deux éléments de référence incluent un élément parmi Ge (germanium) ou Pd (palladium) ou Rb (rubidium), et Tb (terbium).

15. Système d'analyse par activation gamma (113) apte à mettre en œuvre le procédé selon les revendications 1 à 12.

**FIG. 1**

| Target | Prop (%) | Reac | Thr (MeV) | Product | Half-life | Intf | Decay radiations |
|---|---|---|---|---|---|---|---|
| $^{14}$N | 99.636 | (g,n) | 10.553 | $^{13}$N | 9.96 min | | 511.0(199.6%) |
| $^{27}$Al | 100 | (g,n) | 13.286 | $^{26m}$Al | 6.34 s | | 511.0(200.0%) |
| $^{31}$P | 100 | (g,n) | 12.311 | $^{30}$P | 2.50 min | | 511.0(199.7%) |
| $^{35}$Cl | 75.76 | (g,n) | 12.645 | $^{34}$Cl | 1.53 s | | 511.0(199.8%) |
| $^{39}$K | 93.2581 | (g,n) | 13.078 | $^{38}$K | 7.64 min | | 511.0(199.1%) 2167.5(99.9%) |
| $^{54}$Fe | 5.845 | (g,n) | 13.378 | $^{53}$Fe | 8.51 min | | 377.9(42.0%) 511.0(194.0%) |
| $^{63}$Cu | 69.15 | (g,n) | 10.864 | $^{62}$Cu | 9.67 min | | 511.0(195.7%) |
| $^{76}$Ge | 7.73 | (g,n) | 9.568 | $^{75m}$Ge | 47.70 s | | 139.7(39.5%) |
| $^{78}$Se | 23.77 | (g,n) | 10.66 | $^{77m}$Se | 17.36 s | | 161.9(53.2%) |
| $^{80}$Se | 49.61 | (g,n) | 10.01 | $^{79m}$Se | 3.92 min | | 95.7(9.62%) |
| $^{79}$Br | 50.69 | (g,n) | 10.688 | $^{78}$Br | 6.45 min | Yes | 511.0(185.0%) 613.7(13.6%) |
| $^{79}$Br | 50.69 | (g,g) | - | $^{79m}$Br | 4.86 s | | 207.2(76.3%) |
| $^{87}$Rb | 27.83 | (g,n) | 10.478 | $^{86m}$Rb | 1.02 min | | 556.1(98.2%) |
| $^{89}$Y | 100 | (g,g) | - | $^{89m}$Y | 15.66 s | | 909.0(99.2%) |
| $^{90}$Zr | 51.45 | (g,n) | 12.556 | $^{89m}$Zr | 4.16 min | | 587.8(89.6%) |
| $^{92}$Mo | 14.53 | (g,n) | 13.325 | $^{91m}$Mo | 1.08 min | | 511.0(88.0%) 652.9(48.2%) 1508.0(24.2%) |
| $^{108}$Pd | 26.46 | (g,n) | 9.436 | $^{107m}$Pd | 21.30 s | | 214.9(68.7%) |
| $^{110}$Pd | 11.72 | (g,n) | 9.005 | $^{109m}$Pd | 4.69 min | | 188.9(56.0%) |
| $^{107}$Ag | 51.839 | (g,g) | - | $^{107m}$Ag | 44.30 s | | 93.1(4.67%) |
| $^{109}$Ag | 48.161 | (g,n) | 9.185 | $^{108}$Ag | 2.38 min | | 633.0(1.76%) |
| $^{109}$Ag | 48.161 | (g,g) | - | $^{109m}$Ag | 39.60 s | | 88.0(3.70%) |
| $^{123}$Sb | 42.79 | (g,n) | 9.126 | $^{122m}$Sb | 4.19 min | Yes | 61.4(55.0%) 76.1(23.0%) |
| $^{138}$Ba | 71.698 | (g,n) | 9.273 | $^{137m}$Ba | 2.55 min | | 661.7(89.9%) |
| $^{140}$Ce | 88.45 | (g,n) | 9.954 | $^{139m}$Ce | 54.80 s | Yes | 754.2(92.0%) |
| $^{141}$Pr | 100 | (g,n) | 9.396 | $^{140}$Pr | 3.39 min | | 511.0(102.0%) |
| $^{142}$Nd | 27.152 | (g,n) | 10.585 | $^{141m}$Nd | 1.03 min | Yes | 756.5(91.5%) |
| $^{144}$Sm | 3.07 | (g,n) | 10.52 | $^{143}$Sm | 8.75 min | Yes | 511.0(89.8%) |
| $^{144}$Sm | 3.07 | (g,n) | 11.274 | $^{143m}$Sm | 1.10 min | Yes | 754.4(90.1%) |
| $^{159}$Tb | 100 | (g,n) | 8.243 | $^{158m}$Tb | 10.70 s | | X-rays |
| $^{168}$Er* | 26.978 | (g,n) | 7.979 | $^{167m}$Er | 2.27 s | | 207.8(42.4%) |
| $^{180}$Hf* | 35.08 | (g,n) | 7.763 | $^{179m}$Hf | 18.67 s | Yes | 214.3(95.3%) |
| $^{184}$W* | 30.64 | (g,n) | 7.721 | $^{183m}$W | 5.20 s | | 99.1(8.14%) 107.9(18.9%) 160.5(5.12%) |
| $^{186}$W | 28.43 | (g,n) | 7.39 | $^{185m}$W | 1.67 min | | 131.6(4.33%) 173.7(3.26%) |
| $^{191}$Ir | 37.3 | (g,g) | - | $^{191m}$Ir | 4.90 s | | 129.4(26.5%) |
| $^{197}$Au | 100 | (g,g) | - | $^{197m}$Au | 7.73 s | | 279.0(70.9%) |
| $^{204}$Pb | 1.4 | (g,n) | 9.22 | $^{203m}$Pb | 6.21 s | | 825.3(71.6%) |

**FIG. 2**

FIG. 3

FIG. 4

**FIG. 5**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015089580 A

**Non-patent literature cited in the description**

- **YAGI** ; **MASUMOTO**. A New Internal Reference Method for Activation Analysis and its Application. *J. Radioanalytical and Nucl. Chem.*, 1984, vol. 84 (2), 369-380